# EUROPÄISCHE PATENTANMELDUNG

(11) **EP 1 627 950 A1**
(43) Veröffentlichungstag der Anmeldung: **22.02.2006**
(21) Anmeldenummer: 05012969.1
(22) Anmeldetag: 16.06.2005
(51) Int. Cl.: D21B 1/32, D21B 1/02

(54) **Verfahren zum Auflösen von störstoffhaltigem Altpapier**

(30) Priorität: 16.07.2004 AT 12122004
(71) Anmelder: Andritz AG, 8045 Graz (AT)
(72) Erfinder: Hertl, Erwin, Ing., 8111 Judendorf (AT); Sket, Peter, 8101 Gratkorn (AT)
(74) Vertreter: Schweinzer, Friedrich

(57) **Zusammenfassung**

Die Erfindung betrifft ein Verfahren zum Auflösen von störstoffhaltigem Altpapier (1), zur Herstellung von Papier oder Karton, mit einer Zufuhreinrichtung (2), einer Entdrahtung (3) und einer Stoffauflösung (4). Zur Verbesserung der Stoffauflösung (4) und dadurch geringeren Generierung von nicht sortierbaren Störstoffen und der Möglichkeit des Einsatzes von höheren Anteilen Altpapier (1) mit wasserlöslichen Druckfarben ist vor der Stoffauflösung (4) eine Penetrationsstufe (8) vorgesehen.

## Beschreibung

Die Erfindung betrifft ein Verfahren zum Auflösen von störstoffhaltigem Altpapier, zur Herstellung von Papier oder Karton, mit einer Zufuhreinrichtung, einer Entdrahtung und einer Stoffauflösung.

Durch den steigenden Anteil von drucktechnischen Erzeugnissen, welche mit vorwiegend wasserlöslichen Druckfarben bedruckt wurden, sind Prozessanpassungen beim Recyclingprozess und der Wiederaufbereitung im Deinkingprozess erforderlich. Für den Recyclingprozess wird dieser Eintrag von wasserlöslichen Druckfarben problematisch, da sich die Druckfarben in der Suspension unterschiedlich verhalten und teilweise aus einer Suspension überhaupt nicht mehr entfernbar sind. Weiters hat die Beseitigung von Klebern und anderen Störstoffen aus dem Altpapier für Deinkingprozesse in Zukunft immer größere Bedeutung und kann nach heutigem Stand des Wissens, im Wesentlichen nur mehr durch technologische Maßnahmen im Auflöseprozess in dem erforderlichen Ausmaß gesteigert werden. Wichtig ist in diesem Zusammenhang, dass die Beseitigung der erwähnten Störstoffe so gestaltet wird, dass die Ausbeuteverluste gegenüber einer nach dem Stand der Technik installierten Deinkinganlage, nicht weiter ansteigen.

Die heute bekannten Verfahren arbeiten nach dem Prinzip, dass das Altpapier zerfasert wird und alle Druckfarben von den Fasern im alkalischen (Zugabe von Natronlauge, Wasserglas oder Wasserstoffperoxid, etc.) oder im neutralen pH-Bereich (keine oder andere Chemikalien bei der Altpapierauflösung, etc.) abgelöst und durch Flotation und/oder Wäsche aus der Suspension entfernt werden.

Dies hat jedoch den Nachteil, dass durch die Wasserzugabe bei der Altpapierauflösung die Binder der wasserlöslichen Druckfarben teilweise oder ganz (Dispersion und/oder Lösung) im Wasser verteilt werden oder in Lösung gehen. Die dadurch freigesetzten Druckfarbenpartikel oder Farbrückstände, sind zu klein oder vollständig gelöst, und können mittels Flotation nicht effizient genug entfernt werden. Daher wird zur Entfernung dieser Druckfarbenpartikel die Faserstoffwäsche und/oder die neutrale Fahrweise eingesetzt, was jedoch den Nachteil hoher Feststoffverluste mit sich bringt. Ein weiter Nachteil dieses Verfahrens ist der Umstand, dass das Altpapier in seiner ursprünglichen Form dem Altpapierauflösungsprozess zugeführt wird und daher hohe Energiedichten für die Auflösung notwendig sind. Der Nachteil dieser hohen Energiedichten bei der Altpapierauflösung ist, dass auch die im Altpapier enthaltenen Störstoffe stark zerkleinert werden und dadurch die Abscheidbarkeit in den Maschinen und Systemen einer anschließenden Deinkinganlage, verschlechtert wird.

Eine übliche Auflöseanlage ist in der EP 1 170 417 A1 (VOITH) beschrieben, wobei hier die angeführten Probleme bei Einsatz von Altpapier mit wasserlöslicher Druckfarbe besonders stark auftreten. In der DE 33 32 389 A1 (dollard Karton) wird ein Verfahren beschrieben, bei dem der Auflösung eine Einweichtrommel vorgeschaltet wird. Aber auch hier besteht das Problem der hohen erforderlichen Energiedichte für die Stoffauflösung sowie der schlechten Trennbarkeit bei Einsatz von Altpapier mit wasserlöslicher Druckfarbe.

Die Erfindung soll nun die Probleme der bestehenden Verfahren reduzieren bzw. ganz eliminieren. Speziell bei Einsatz von Altpapier mit wasserlöslicher Druckfarbe soll die Reinigung und Ausbeute verbessert werden.

Die Erfindung ist daher dadurch gekennzeichnet, dass vor der Stoffauflösung eine Penetrationsstufe vorgesehen ist. Unter Penetration ist einerseits die Ablösung der wasserlöslichen Druckfarbpartikel von dem Faserstoff des Altpapiers sowie auch das Eindringen von Flüssigkeit, d.h. Wasser und/oder Chemikalien, in die Altpapierstücke zu verstehen. In dieser Prozessstufe werden die wasserlöslichen Druckfarben von den Fasern, Füllstoffen oder den Streichpigmenten abgelöst und in das wässrige Transportmittel dispergiert. Die nicht wasserlöslichen Druckfarben bleiben bei diesem Prozessschritt unverändert an der Faser, Füllstoff und Streichpigmenten ebenfalls wie die Feinstoffe und Aschepartikel. Die Papierstücke bleiben in ihrer Morphologie weitestgehend erhalten. Feinstoffe und Asche bleiben in diesem Papierstück erhalten und gehen somit nicht als Dispersion in die wässrige Phase über. Dadurch wird es möglich "asche- und feinstofferhaltend" in nachfolgenden Prozessstufen diese Druckenfarbendispersionen aus der Wasserphase abzutrennen und aus dem Deinkingsystem auszuscheiden.

Eine vorteilhafte Weiterbildung der Erfindung ist dadurch gekennzeichnet, dass zur Penetration Wasser aufgegeben wird, wobei auch Chemikalien, wie z.B. Natronlauge, Wasserglas, Wasserstoffperoxid, Komplexbildner und Seife und/oder Tensid in die Penetrationsstufe zugegeben werden können. Durch die Zugabe von Wasser und/oder Chemikalien kann der Ablöse- bzw. Penetrationsprozess gut gesteuert und optimiert werden.

Besonders vorteilhaft ist, wenn vor der Penetrationsstufe eine Zerkleinerungsstufe für das trockene Material (Altpapier) vorgesehen ist. Durch diese Zerkleinerung wird die Penetrationszeit des Wassers in das Altpapier reduziert und dadurch auch die benötigte Altpapierauflösungszeit, woraus sich wiederum ein reduzierter spezifischer Energieeintrag in der Auflösestufe ergibt. Obwohl beim Zerkleinerungsprozess eine gewisse Zerkleinerung der Störstoffe stattfindet, wird durch den daraus resultierenden reduzierten Energieeintrag beim Altpapierauflösungsprozess eine in Summe bessere Faserstoffqualität erreicht.

Als besonders vorteilhaft hat sich erwiesen, dass der Zerkleinerungsstufe eine Schwerteilabscheidung, beispielsweise ein Luft-Cleaner, nachgeschaltet ist. Dadurch können die Apparate der nachfolgenden Prozessschritte vor Verschleiß geschützt werden. Diese Schwerteilabscheidung entfernt alle Schwerteile, wie Stahl, Eisen, groben Sand, Kunststoff und andere grobe Störstoffe.

Eine günstige Ausgestaltung der Erfindung ist dadurch gekennzeichnet, dass das Feststoff-Flüssigkeitsgemisch nach der Penetrationsstufe entwässert bzw. eingedickt wird, wobei das störstoffhaltige Wasser einer Wasseraufbereitung, beispielsweise einer Filtration, zugeführt werden kann. Die in das Wasser fein dispergierten oder gelösten Druckpartikel oder Farbstoffe, können so in einem weiteren Prozessschritt in einer Wasseraufbereitungsstufe, wie z.B. Festbett-, Nano-, Ultra-, Feinfiltration, Umkehrosmose, Cleaner, Dekanter/Zentrifugen oder auch in deren Kombination untereinander mit/ohne Chemikalienzugabe, wie z.B. Dispergatoren, Agglomeratoren, Flockungsmittel, Flockungshilfsmittel, Fällungsmittel, auch in deren Kombination untereinander aus dem Wasser in einen anfallenden Schlamm überführt werden.

Vorteilhaft hat sich erwiesen, wenn das gereinigte Wasser wieder der Penetrationsstufe aufgegeben wird.

Die Erfindung wird nun anhand der Zeichnungen beispielhaft beschrieben, wobei

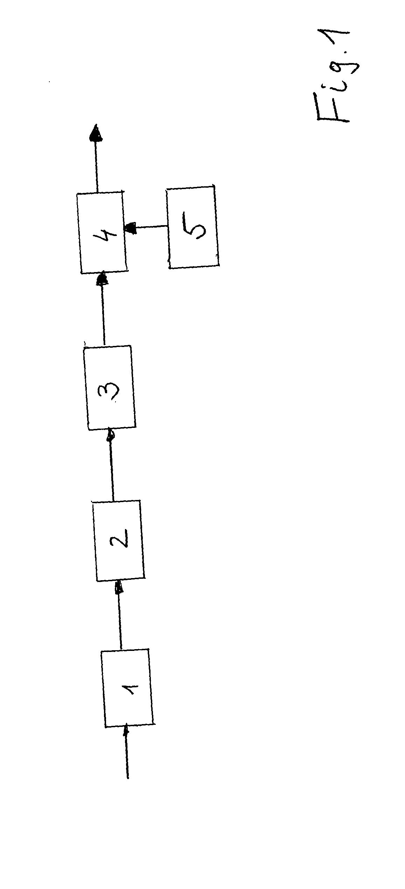

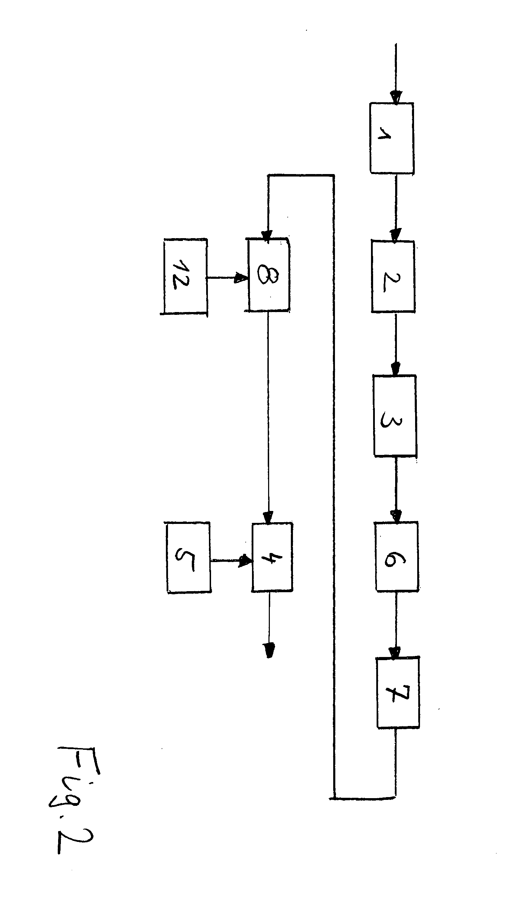

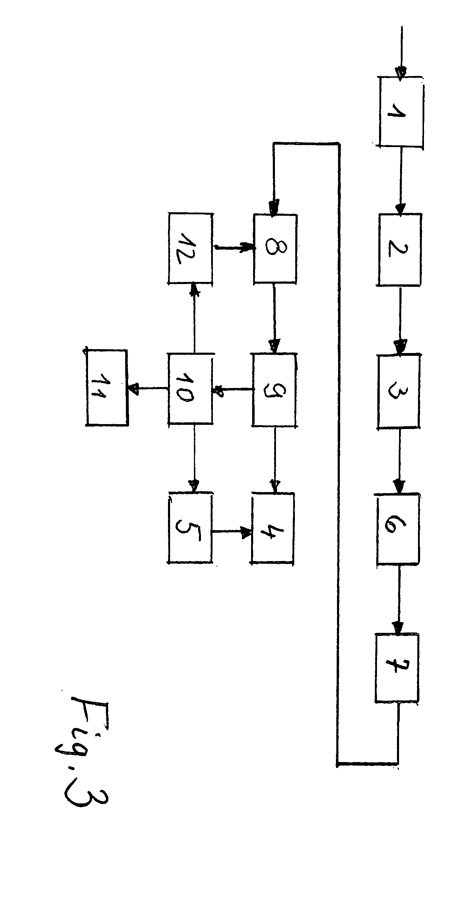

Fig. 1 das Verfahrensschema nach dem Stand der Technik, Fig. 2 eine Variante der Erfindung und Fig. 3 eine weitere Variante der Erfindung darstellt.

Das einlangende Altpapier ist sowohl mit wasserlöslichen wie auch mit wasserunlöslichen Druckfarben bedruckt. Wasserlösliche Druckfarben bestehen aus anorganischen und organischen Farben und Farbpigmenten und anderen Zusatzstoffen sowie Bindern. Diese Binder sind unter gewissen chemischen und/oder physikalischen Bedingungen in Wasser dispergierbar bzw. löslich. Die Farbpigmente und Zusatzstoffe liegen dann als sehr kleine Teilchen dispergiert bzw. teilweise vollständig gelöst in Wasser vor. Diese Teilchen sind zu klein, um in einer Deinkingflotation ausgeschieden werden zu können. Die vollständig gelösten und/oder dispergierten Farbbestandteile stören in einer Deinkinganlage nach dem Stand der Technik bei den geforderten geringen Verlusten an Feinstoffen, Asche und Fasern durch ihre Eigenfarbe. Die Endqualität - speziell die Weiße und Helligkeit, sowie der Farbort - werden dadurch negativ beeinflusst.

Wasserunlösliche Druckfarben können mit einem Standard-Deinkingprozess wie er Stand der Technik ist, abgeschieden werden. Dieser Prozess wird hier nicht mehr näher erörtert. Kleber und Störstoffe (alle Arten von das Endprodukt des Deinkingprozesses störenden Produkte) sind unerwünschte Bestandteile des in die Deinkinganlage angelieferten Altpapiers und bestehen aus organischen und/oder anorganischen Bestandteilen oder eine Kombination beider Komponenten, die für die Erzeugung und Auslieferung an den Endkunden (Zeitung, Werbematerial, etc.) erforderlicherweise dem ursprünglichen Papierprodukt zugefügt wurden oder aber am Weg des Altpapierrecyclings in die Deinkinganlage als Verunreinigung hinzugekommen sind. Kleber und Störstoffe stören in jedem Fall den Deinkingprozess und beeinflussen deren Endproduktqualität und die Laufeigenschaften der Papiermaschine negativ.

In Fig. 1 ist ein Auflöseprozess nach dem Stand der Technik dargestellt. Er besteht aus einem Zuführsystem 2, womit das Altpapier 1 in loser, in Ballenform oder einer beliebigen anderen Form nach einer Entdrahtung 3 der Altpapierauflösung 4, zugeführt wird. Die Altpapierauflösung 4 wird üblicherweise unter Wasserzugabe 5 in einem Stoffdichtebereich von 3-30% und einer Temperatur von 30-80°C kontinuierlich oder diskontinuierlich in Stoffauflösern oder Auflösetrommein oder einer Kombination durchgeführt. Die Rejektentsorgung erfolgt durch ein sogenanntes Entsorgungssystem, wobei der gesamte Stoffstrom oder ein Teilstrom über dieses Entsorgungssystem geführt wird und dabei die Rejekte abgetrennt und ausgeschleust werden. Bei der Altpapierauflösung können wahlweise auch Chemikalien wie z.B. Natronlauge, Wasserglas, Wasserstoffperoxid, Komplexbildner und Seife und/oder Tensid oder den Prozess begünstigende andere Zusatzstoffe zugegeben werden. Nach dem Altpapierauflösungsprozess wird der zerfaserte Altpapierstoff einer weiteren Behandlung zugeführt, der hier nicht mehr näher erörtert wird.

In Fig. 2 wird ein Prozess beschrieben, der Altpapier mit einer heute üblichen Altpapierqualität mit einem Anteil an mit wasserlöslichen Druckfarben bedrucktem Altpapier, wie er nach heutigem Stand in einer Standard-Deinkinganlage eingesetzt wird verwendet, wobei der Anteil maximal so hoch sein kann, dass bei den heute erreichbaren Qualitäten und Ausbeuten eine Aufbereitung in einer Standard-Deinkinganlage erfolgen kann. Der Prozess findet auch Anwendung in Altpapierauflöseanlagen bei Einsatz von jeder möglichen Zusammensetzung von Altpapier, insbesondere auch von bedrucktem oder unbedrucktem Karton. Der Prozess besteht aus einem Zuführsystem 2 und einem Entdrahtungssystem 3, der Vorschaltung einer Zerkleinerungsstufe 6 und einer Schwerteilabscheidestufe 7 vor der nachgeschalteten Ablöse-und/oder Penetrationsstufe 8, wobei dieser Stufe die Altpapierauflösestufe 4 nachgeschaltet ist. Dieses System dient zur Auflösung und Reinigung von Altpapier, das aus mit der nach Stand der Technik üblichen Altpapierqualität besteht. Das System besteht im wesentlichen aus einer Zerkleinerungsstufe 6 in der das angelieferte Altpapier nach Bedarf zerkleinert wird, z.B. durch Einsatz eines Shredders oder einer Hacke, etc., um die effektive Oberfläche des Altpapiers für die nachfolgenden Prozessschritte Ablöse- und/oder Penetrationsstufe 8 und der Altpapierauflösestufe 4 zu vergrößern und somit die Wasserpenetrations- und Altpapierauflösungsgeschwindigkeit deutlich zu erhöhen. Zum mechanischen Schutz der nachfolgenden Maschinen und

Systeme wird der Zerkleinerungsstufe ein Schwerteilabscheidesystem 7, z.B. ein Luft-Cleaner nachgeschaltet. In der nachfolgenden Penetrationsstufe 8, die z.B. eine Verdrängungswaschstufe, ein Einweichbehälter, Entwässerungstrommel, etc. sein kann, wird Wasser in der erforderlichen Menge, z.B. für eine Konsistenz von 1 - 60 %, Qualität, Temperatur, z.B. 30 - 80° C und pH-Wert, z.B. 5 - 10, etc. zugegeben, um nach Bedarf das trockene Altpapier mit Wasser mit bzw. ohne Chemie so zu penetrieren, dass der Auflöseprozess 4 vorteilhafter für die Nichtauflösung und Nicht-Dispergierung von Störstoffen wird. Grund dafür sind die chemischen und physikalischen Bedingungen während der Ablösung in der Ablöse- und/oder Penetrationsstufe 8 und die Tatsache, dass nach Kontakt der Papierstücke mit dem Wasser und/oder den Chemikalien (wie Natronlauge, Wasserglas und

Wasserstoffperoxid, Agglomeratoren, Dispergatoren, Seifen, Tensiden, Flockungs- und Fällungsmittel, etc. oder deren Kombination untereinander), nur geringe mechanische Energie in das Ablöse-System, im Vergleich zur Altpapierauflösestufe, eingetragen wird. Die Vorteile der Zerkleinerung und

Penetration in der Ablöse- und/oder Penetrationsstufe 8 für die nachfolgende Altpapierauflösestufe 4 liegen vor allem darin, dass diese Altpapierauflösestufe 4 durch die leichte Zerfaserbarkeit und leichtere Ablösung der Druckfarbenteilchen von den Fasern, Füllstoffen und Streichpigmenten der bereits penetrierten Papierstücke, wesentlich geringere Energieeinträge und/oder niedrigere Altpapierauflösetemperaturen sowie gegebenenfalls niedrigere pH-Werte benötigt. Daraus resultieren auch kleinere Altpapierauflösemaschinen.

Durch diese Verbesserung der Prozessbedingungen für die Altpapierauflösestufe 4 werden wesentlich weniger Macrostickies (sortierbare Form der Kleberteilchen) und Kleberstücke (größer als Macrostickies) dispergiert oder aufgelöst. Eine Sortierung mit den nachgeschalteten Grob-, MC-Fein und/oder LC-Feinsortierern, ist daher wesentlich effektiver als beim Deinkingprozess nach dem Stand der Technik. Die Papierstücke werden nach der erforderlichen Einwirkzeit bzw. Verweilzeit von ca. 1 bis 120 min. im Ablösesystem 8, in das Auflösesystem 4 überführt, wo die eigentliche Auflösung bzw. Zerfaserung erfolgt. Dabei wird Wasser in der erforderlichen Menge, Qualität, Temperatur und pH-Wert, etc. in diese Altpapierauflösestufe 4 zugegeben. Auch die Optimierung und Einstellung der physikalischen (z.B. Temperatur, etc.) und chemischen Parameter (Zusatzstoffe, wie Natronlauge, Wasserglas und

Wasserstoffperoxid, Agglomeratoren, Dispergatoren, Seifen, Tenside, Flockungs- und Fällungsmittel, etc., bzw. deren Kombination untereinander), kann nach Bedarf diesen Altpapierauflöseprozess 4 weiter verbessern.

Der weitere Aufbereitungsprozess nach der Altpapierauflösung erfolgt gemäß dem bekannten Stand der Technik und wird hier nicht mehr näher erörtert.

In Fig. 3 wird nach dem Zuführsystem 2 und dem Entdrahtungssystem 3 die Vorschaltung der Zerkleinerungsstufe 6 vor die Schwerteilabscheidestufe 7, die nachgeschaltete Ablöse- und/oder Penetrationsstufe 8 und diese vor die nachgeschaltete Trennstufe 9 vor der Altpapierauflösestufe 4 beschreiben. Das eingesetzte Altpapier kann einen Anteil von bis zu 100 %, besonders vorteilhaft ab 5%, mit wasserlöslichen Druckfarben bedrucktem Altpapier aufweisen. Ein Teil dieses Systems wurde im Wesentlichen bereits zu Fig. 2 beschrieben.

Dadurch, dass die Papierstücke in ihrer Morphologie vollständig und die Feinstoffe und Asche in diesem Papierstück erhalten bleiben, gehen diese somit nicht als Dispersion in die wässrige Phase über. Somit wird es möglich "asche-und feinstofferhaltend" in nachfolgenden Prozessstufen diese Druckfarbendispersionen aus der Wasserphase abzutrennen und aus dem Deinkingsystem auszuscheiden.

Nach erfolgter Penetration in der Ablöse- und/oder Penetrationsstufe 8 werden die Papierstücke nach der erforderlichen Einwirkzeit bzw. Verweilzeit von ca. 1 bis 120 min. in der Ablöse- und/oder Penetrationsstufe 8, von der Flüssigkeit in der Trennstufe 9, z.B. einer Verdrängungswäsche und/oder Wascheindicker oder Eindicker voneinander getrennt. Die in das Wasser fein dispergierten oder gelösten Druckpartikel oder Farbstoffe können so in einem weiteren Prozessschritt in einer Wasseraufbereitungsstufe 10, wie z.B. Festbett-, Nano-, Ultra-, Feinfiltration, Umkehrosmose, Cleaner, Dekanter/Zentrifugen oder anderen Maschinen auch in deren Kombination untereinander, gegebenenfalls durch Chemikalienzugabe, wie z.B.

Dispergatoren, Agglomeratoren, Flockungsmittel, Flockungshilfsmittel, Fällungsmittel, auch in deren Kombination untereinander, aus dem Wasser in einen anfallenden Schlamm 11 überführt werden. Das Wasser wird in dieser Wasseraufbereitungsstufe 10 derart gereinigt, dass es wieder in der Ablöse-und/oder Penetrationsstufe 8 eingesetzt werden kann, wobei es bei 12 mit frischem Wasser vermischt und die entsprechenden Bedingungen (Temperatur, pH-Wert, Chemikalienzumischung) eingestellt werden. Die in der Trennstufe 9 auf 5 - 60% entwässerten Papierstücke, werden der Auflösestufe 4 zugeführt, in der die weitere Aufbereitung in eine Deinkinglinie nach dem Stand der Technik durchgeführt wird. Durch dieses Verfahren kann als Rohstoff Altpapier mit einem hohen Anteil an mit wasserlöslichen Druckfarben bedrucktem Altpapier eingesetzt werden ohne Verluste bei der Qualität und Ausbeute gegenüber dem Stand der Technik.

Weitere Verbesserungen auf den gesamten Deinkingprozess durch Auswirkung der Erfindung auf nachgeschaltete Systeme und Maschinen sind:
- höhere Endweißegrade, da zur Zeit immer ein unbekannter Anteil an nicht deinkbarem, mit wasserlöslichen Druckfarben bedruckten Altpapier im Gesamtaltpapiereintrag vorhanden ist, dessen Auswirkungen auf die Endqualität zur Zeit nicht quantitativ bekannt sind und es zur Zeit auch noch keine Messmethode für den Anteil dieser Druckfarben im Altpapier gibt.

Weitere Vorteile, wie bereits beim System nach Fig. 2, sind
- höhere Kleberabscheidungswirkungsgrade
- höhere Ausbeute
- möglicher Wegfall und/oder mögliche Verkleinerungen von nachfolgenden Systemen oder Maschinen.

## Patentansprüche

1. Verfahren zum Auflösen von störstoffhaltigem Altpapier, zur Herstellung von Papier oder Karton, mit einer Zufuhreinrichtung, einer Entdrahtung und einer Stoffauflösung, **dadurch gekennzeichnet, dass** vor der Stoffauflösung eine Penetrationsstufe vorgesehen ist.

2. Verfahren nach Anspruch 1, **dadurch gekennzeichnet, dass** zur Penetration Wasser aufgegeben wird.

3. Verfahren nach Anspruch 1 oder 2, **dadurch gekennzeichnet, dass** in die Penetrationsstufe Chemikalien, wie z.B. Natronlauge, Wasserglas, Wasserstoffperoxid, Komplexbildner und Seife oder/und Tensid zugegeben werden.

4. Verfahren nach einem der Ansprüche 1 bis 3, **dadurch gekennzeichnet, dass** vor der Penetrationsstufe eine Zerkleinerungsstufe für das trockene Material vorgesehen ist.

5. Verfahren nach Anspruch 4, **dadurch gekennzeichnet, dass** der Zerkleinerungsstufe eine Schwerteilabscheidung, beispielsweise ein Luft-Cleaner, nachgeschaltet ist.

6. Verfahren nach einem der Ansprüche 1 bis 5, **dadurch gekennzeichnet, dass** das Feststoff-Flüssigkeitsgemisch nach der Penetrationsstufe entwässert bzw. eingedickt wird.

7. Verfahren nach Anspruch 6, **dadurch gekennzeichnet, dass** das störstoffhaltige Wasser einer Wasseraufbereitung, beispielsweise einer Filtration, zugeführt wird.

8. Verfahren nach Anspruch 7, **dadurch gekennzeichnet, dass** das gereinigte Wasser wieder der Penetrationsstufe aufgegeben wird.
